# EUROPEAN PATENT APPLICATION

(11) **EP 1 236 683 A1**
(43) Date of publication of application: **04.09.2002**
(21) Application number: 01810219.4
(22) Date of filing: 02.03.2001
(51) Int. Cl.: C02F 1/00, B67D 1/12

(54) **Water purifier**

(71) Applicant: Lux Asia Pacific Pte Ltd., Singapore 409962 (SG)
(72) Inventor: Larsson, Anders, 6403 Küssnacht am Rigi (CH)
(74) Representative: Clerc, Natalia

(57) **Abstract**

A water purifier to be fed with pressurized water comprises a housing (1) with a lower part (10) and a top (11) to open the housing (1), a water inlet (5) provided with a first valve (8) for turning on/shutting off the water pressure, a water outlet (13) and at least one purifier chamber (2,3,3') being arranged in the lower part (10) and being positioned between and connected to the water inlet (5) and water outlet (13). The at least one purifier chamber (2,3,3') has a removable part (20,30,30') which can be accessed when the top (11) is open. The water purifier further comprises a contact means (4) being in operative connection with the top (11) and a relief water line (9') with a second valve (9), wherein the relief water line (9') branches off a water connection between the water inlet (5) and the water outlet (13) and the second valve (9) is in operative connection with the contact means (4), the second valve (9) being opened when the contact means (4) detects that the top (11) is opened. This prevents water to be spilled out when the chambers are opened.

## Description

### BACKGROUND OF THE INVENTION

The present invention relates to a water purifier according to the preamble of claim 1.

There exist water purifiers with a quite simple design, where the water is forced through purifier chambers arranged in a housing, by the pressure in a water distribution system being connected with the water purifier. Usually, an inlet conduit of the water purifier is provided with a valve in order to turn on/shut off the water pressure and therefore connect or disconnect the purifier chambers with respectively from a water pipe. A corresponding water purifier is disclosed in WO 97/05063 and GB-A-2'267'635, wherein in the last mentioned publication, the valve is arranged at the outlet.

These purifier chambers, usually containing either carbon filters, particle filters and UV-lamps, have to be opened periodically to exchange or clean the filters inside or to exchange the UV-lamp. Since the pressure in the purifier chambers, especially in the filter chambers, is only reducing very slowly to atmospheric pressure, they usually are still under pressure when they are opened, with the effect, that water squirts and flows into the housing of the water purifier and that it may cause the surrounding items and/or persons to get wet.

### SUMMARY OF THE INVENTION

It is therefore an object of the present invention to provide a water purifier where the chambers can be opened without water squirting.

This object is achieved according to the invention by means of the features of claim 1.

The water purifier according to the invention comprises a contact means which detects when a housing of the water purifier is opened and which causes the water pressure inside the purifier chambers to be reduced.

In a preferred embodiment, the water purifier comprises a relief water line with a valve, the valve being opened when a contact means detects, that the housing is opened in order to have access to purifier chambers.

In a preferred embodiment the power supply is shut off additionally when the contact means detects, that the housing is opened.

In another preferred embodiment an inlet valve, which connects the purifier chambers with a water distribution system, is first closed, when the contact means detects an open housing, the relief valve being opened afterwards.

In another preferred embodiment the relief valve is a high-pressure relief valve, also opening, when the pressure inside the purifier chambers reaches a predefined level.

Additional preferred embodiments are described in the dependent claims.

### BRIEF DESCRIPTION OF THE DRAWINGS

A more complete appreciation of the invention will be obtained as the same becomes better understood by reference to the following description when considered with the accompanying drawings, wherein:
figure 1 shows a schematically view of a water purifier according to the invention;
figure 2 shows a partial cross-section through the water purifier according to figure 1 and
figure 3 shows a schematic view of purifier chambers connected with each other.

### DESCRIPTION OF THE PREFERRED EMBODIMENTS

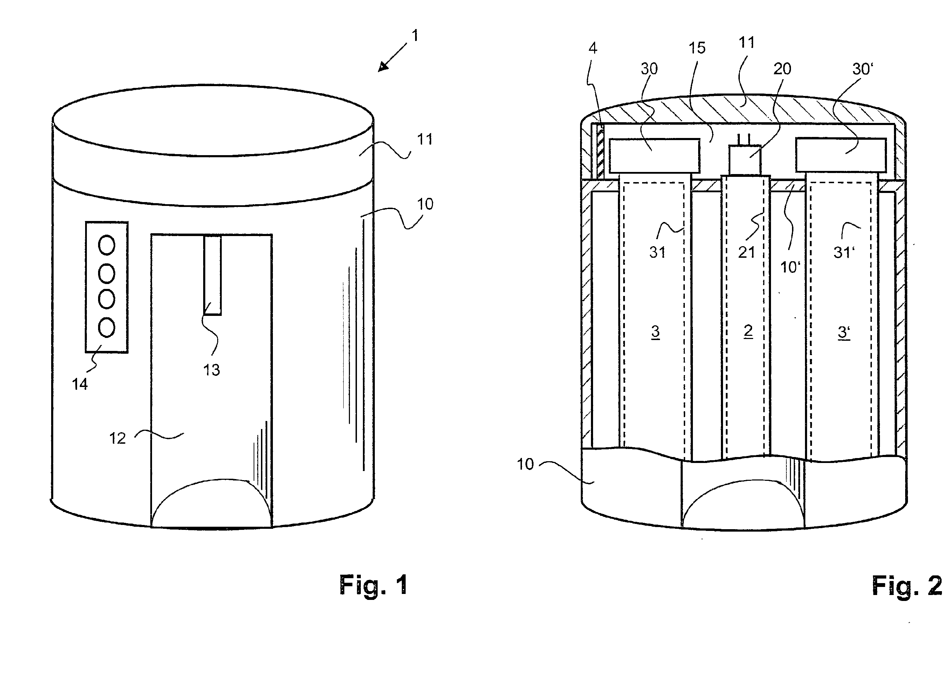

Figure 1 shows a water purifier according to the invention. This water purifier usually has the size of a home coffee machine and is transportable. The water purifier comprises a housing 1 with a lower part 10 and a top 11. The top 11 can be opened, wherein in one embodiment, it can be removed from the lower part 10 and in another embodiment, it is connected with the lower part 10 by a hinge. Switches to manually control the apparatus are arranged in the housing 10; in figure 1 a switch panel 14 is shown in a front cover. A water outlet 13 penetrates the lower part 10 of the housing 1, being arranged in a clearance 12. In this clearance 12, a glass or a bottle can be entered to be filled up with purified water.

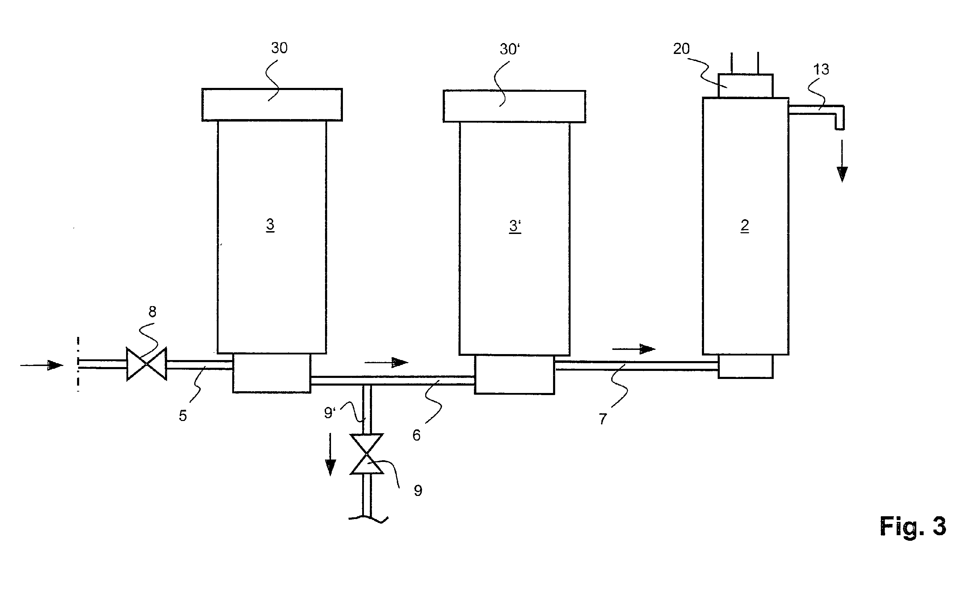

As shown in figure 2, the lower part 11 contains at least one purifier chamber 2,3,3'. In case of more than one purifier chambers, the chambers are connected with each other in series through connecting water lines 6,7, shown in figure 3. In the preferred embodiment described herein, the water purifier comprises three purifier chambers, the first one being a sediment filter chamber 3 containing a particle or sediment filter 31 inside, the second being a polishing filter chamber 3' with a polishing or carbon filter 31' and the third being a UV-chamber 2 with a UV-lamp 21 inside. The order of the numbering of the chambers show their position relative to each other in the direction of the water flow through the water purifier. The water purifier, i.e. its purifier chambers 2,3,3' can be connected to a normal water distribution system of a house, i.e. a water pipe. As shown in figure 3, the first purifier chamber 3 is therefore connected with an inlet pipe 5 with a first valve, the inlet valve 8. This inlet valve 8 is usually a solenoid valve and is controlled by control means, activated by the control switches, to open and close the connection to the water pipe and therefore to turn on or shut off the water pressure.

Back to figure 2, the filter chambers 3,3' are on their upper end closed with a removable cap 30,30'. The upper part 20 of the UV-lamp 21 rises with its electrical contacts above the UV-chamber 2. This upper part 20 and the aforementioned caps 30,30' are positioned in a cavity 15 formed by the top 11 of the housing 1. Preferably, the cavity 15 is closed by the top 11 and by a plate 10' closing the lower part 10 on its upper side.

When a filter or a UV-lamp shall be removed or cleaned, the top 11 has to be opened first before the caps 30,30' can be removed to give access to the filter respectively the UV-lamp 21 can be removed. This fact is used in the water purifier according to the invention, in such a way that this water purifier has a contact means 4 which is in operative connection with the top 11 and which detects that the top 11 is opened. As shown in figur 2, the contact means 4 can be a spring-suspended bolt arranged between top 11 and lower part 10, preferably in the cavity 15. Electrical contact means are also possible.

The water purifier according to the invention also comprises a relief water line 9' with a second valve, a relief valve 9. Normally, this valve is a solenoid valve too. The relief water line 9' branches off the water connection connecting the two filter chambers 3,3'. In case of more than two filter chambers, there can be a relief water line 9' with a relief valve 9 between each of the filter chambers or just one before the last filter chamber.

The relief valve 9 is in operative connection with the contact means 4. When the contact means 4 detects, that the top 11 is opened, the relief valve 9 is opened too in order to reduce the pressure in the purifier chambers 2,3,3', especially in the filter chambers 3,3'. Since this usually happens early enough before the caps 30,30' or the UV-lamp 21 are removed, the water level inside the chambers can drop and the pressure can decrease so that no water spills out at the upper end of the chambers. The connection between the contact means 4 and the relief valve 9 can be an electronic or a mechanic one. Preferably, the relief valve 9 is a high-pressure relief valve, which opens when the water pressure inside the housing, especially inside the filter chambers 3,3' increases to a predefined maximum level, even when the top 11 is closed.

In a preferred embodiment, the contact means 4 is also in operative connection with a power supply of the water purifier, the power supply being shut off or at least the switches being disabled when the contact means 4 detects that the top 11 is opened.

Preferably, the contact means 4 is also in operative connection with a control means of the inlet valve 8, wherein this connection can be controlling the other functions of the inlet valve 8 in a direct way or through control means. In this case, the inlet valve 8 is closed, when the top 11 is opened. Preferably, the relief valve 9 is opened delayed after the inlet valve 8 has been opened. The inlet valve 8 can also be closed when the power supply is shut off as described above.

In the embodiment described above, the relief valve causes the reduction of pressure in the purifier chamber. In another embodiment, the contact means causes the pressure to be reduced in another way: for example by activating an optical or acoustic signal to inform the user, that the pressure has to be reduced by hand. Another possibility is that the purifier chambers can not be opened, the contact means disabling the opening as long as the pressure is not reduced.

In other embodiments, the housing can not be opened at the top, but on another side. The contact means are then in contact with this part of the housing. In the above described embodiment, the chambers are arranged in vertical direction so that the chambers can be accessed in an easy way. It is also possible to arrange the UV-chamber in a horizontal direction.

The water purifier according to the invention enables maintenance without the risk that the purifier itself or its surrounding gets wet.

### LIST OF REFERENCE NUMBERS

- 1: housing
- 10: lower part
- 11: top
- 12: clearance
- 13: water outlet
- 14: switch panel
- 15: cavity
- 2: UV-chamber
- 20: upper part
- 21: UV-lamp
- 3: sediment filter chamber
- 30: cap
- 31: sediment filter
- 3': polishing filter chamber
- 30': cap
- 31': sediment filter
- 4: contact means
- 5: water inlet
- 6: connecting water line
- 7: connecting water line
- 8: inlet valve
- 9: relief valve
- 9': relief water line

## Claims

1. A water purifier to be fed with pressurized water, the water purifier comprising
a housing (1),
a water inlet (5) provided with a first valve (8) for turning on/shutting off the water pressure,
a water outlet (13) and at least one purifier chamber (2,3,3') being arranged in the housing (1) and being positioned between and connected to the water inlet (5) and water outlet (13), the at least one purifier chamber (2,3,3') having a removable part (20,30,30') which can only be accessed when the housing (1) is open,
**characterized in that**
the water purifier further comprises
a contact means (4) being in operative connection with the housing (1) and the contact means (4) causing the water pressure inside the at least one purifier chamber (2,3,3') to be reduced when the contact means (4) detects that the housing (1) is opened.

2. A water purifier according to claim 1, wherein the water purifier further comprises a relief water line (9') with a second valve (9), wherein the relief water line (9') branches off a water connection between the water inlet (5) and the water outlet (13) and the second valve (9) is in operative connection with the contact means (4), the second valve (9) being opened when the contact means (4) detects that the housing (1) is opened.

3. A water purifier according to claim 1, wherein the contact means (4) is in operative connection with control switches (14) of the water purifier, the control switches (14) being disabled when the contact means (4) detects that the housing (1) is opened.

4. A water purifier according to claim 1, wherein the contact means (4) is in operative connection with the first valve (8), the first valve (8) being closed when the contact means (4) detects that the housing (1) is opened.

5. A water purifier according to claim 1, wherein the second valve (9) is a high-pressure relief valve.

6. A water purifier according to claim 1, wherein the water purifier comprises at least two purifier chambers being connected with connecting water lines (6,7), wherein one of the chambers is a UV-chamber (2) comprising a UV-lamp (21) and the at least one other chamber is a filter chamber (3,3') comprising a filter (31,31') and wherein the relief water line (9') branches off before the last of the at least two purifier chambers (2,3') in direction of the water flow through the water purifier.

7. A water purifier according to claim 6, wherein the water purifier comprises at least two filter chambers (3,3') and the relief water line (9') branches off the water connection between two of the filter chambers (3,3').

8. A water purifier according to claim 7, wherein the relief water line (9') branches off the water connection between the two filter chambers (3,3') which are the last two in direction of the water flow through the water purifier.
